# EUROPÄISCHE PATENTSCHRIFT

(11) **EP 2 016 324 B1**
(45) Veröffentlichungstag und Bekanntmachung des Hinweises auf die Patenterteilung: **27.07.2011**
(21) Anmeldenummer: 07723587.7
(22) Anmeldetag: 26.03.2007
(51) Int. Cl.: F16L 37/34, F16L 37/23

(54) **LECKARME FLUIDKUPPLUNG**
LEAKAGE MINIMIZED FLUID COUPLING
COUPLEUR HYDRAULIQUE SANS FUITES

(30) Priorität: 11.05.2006 DE 102006022285
(43) Veröffentlichungstag der Anmeldung: 21.01.2009
(73) Patentinhaber: TEMA Ingenjörsfirman AB, 541 06 Skövde (SE)
(72) Erfinder: FRANK, Hans, 71735 Eberdingen-Nussdorf (DE)
(74) Vertreter: Rüger, Barthelt & Abel Patentanwälte
(86) Internationale Anmeldenummer: PCT/EP2007/002640
(87) Internationale Veröffentlichungsnummer: WO 2007/131569

(56) Entgegenhaltungen:
- EP-A1- 1 464 883
- WO-A-97/35143
- US-A- 5 092 364
- US-A- 5 255 714
- US-A- 5 445 358
- US-A1- 2002 148 514
- US-A1- 2003 145 892

## Beschreibung

Aus dem Stand der Technik ist es bekannt, den Stecker im Buchsenteil einer Fluidkupplung mit Hilfe von Kugeln oder ähnlichen Verriegelungsgliedern zu halten. Die Kugeln sitzen in Querbohrungen, die im Mündungsbereich des Buchsenkörpers ausgebildet sind. Der Durchmesser der Kugeln ist größer als die Wandstärke in diesem Bereich. Die Kugeln können deswegen mit Hilfe einer außen befindlichen Schiebehülse in eine Position gebracht werden, in der sie in die Bohrung in der Mündung vorragen. Sie können so einen mit einer komplementären Rille ausgestatteten Stecker im Buchsenteil festhalten.

In der Regel ist die Betätigungshülse, die die Kugeln in ihrer radial inneren Stellung festhält, in die Haltestellung vorgespannt. Ohne besondere Vorkehrungen ist die Betätigungshülse immer bestrebt in eine Lage zu kommen, in der die Kugeln in der Arretier- oder Haltestellung für den Stecker arretiert werden.

Damit bei nicht eingestecktem Stecker die Kugeln in den Querbohrungen in der radial äußeren Stellung bleiben und durch die federvorgespannte Betätigungshülse nicht nach innen gedrängt werden können, sitzt in der Bohrung, die das Mundstück des Steckers aufnimmt, ein Steuerring. Beim Einstecken des Steckers wird der Steuerring in das Innere des Buchsenteils geschoben, damit die Kugeln mit Hilfe der Betätigungshülse in die oben erwähnten Arretierstellung gelangen können.

Der in dem Mündungsbereich sitzende Steuerring erhöht wesentlich den Betätigungshub beim Einstecken des Steckers, der von Beginn der Berührung zwischen Stecker und Steuerring bis zum Verrasten des Steckers ca. zwei Kugeldurchmessern oder mehr entspricht.

Diese Form der Sicherung des Steckers im Buchsenteil macht bei Kupplungen für gasförmige Medien keine Probleme, da es in der Regel nicht störend ist, wenn beim Trennen der Kupplung Gas austritt.

Ein Austreten von Medium aus dem Buchsenteil muss jedoch weitgehend vermieden werden, wenn es sich um Flüssigkeiten handelt, die durch die gekuppelte Kupplung hindurch strömen. Aufgrund des bei den bekannten Kupplungen verwendeten Rings im inneren der Aufnahmeraum ist das Totvolumen verhältnismäßig groß und es entstehen beim Trennen verhältnismäßig große Leckagemengen.

Bei so genannten Flat-Face-Kupplungen, wie sie im Hydraulikbereich Anwendung finden, wird die Leckmenge vermindert, indem das Ventil zum Absperren des Buchsenteils unmittelbar im Mündungsbereich des Buchsenteils angeordnet ist. Dadurch wird gleichzeitig das Verschlussglied für den Ringspalt, in den der Stecker eingeführt wird als Steuerring verwendet, um die Kugeln in der radial äußeren Stellung zu halten und somit die Betätigungshülse daran zu hindern die Position entsprechend der gekuppelten Stellung einzunehmen.

Die Flat-Face-Kupplung ist zwar verhältnismäßig leckarm, dafür enthält sie verhältnismäßig viele Bauteile, was einer Miniaturisierung entgegensteht. Ein weiterer Nachteil bei der Flat-Face-Kupplung ist der lange Betätigungsweg beim Zusammenstecken über den der Benutzer beim Steckvorgang Kraft auf den Stecker bzw. das Buchsenteil ausüben muss.

Da bei der Flat-Face-Kupplung der Spalt, in der der Stecker eingeführt wird, verschlossen ist, fehlt auch eine Vorzentrierung, was den Benutzer zwingt, den Einsteckvorgang optisch genau zu kontrollieren.

Die US 5,092,364 zeigt eine Fluidkupplung, die keinen innen liegenden Steuerring benötigt um die Fangkugeln in der radial außen liegenden Stellung zu halten. Im Einzelnen ist die Anordnung so getroffen, dass der Grundkörper neben der Einstecköffnung für den Stecker eine Reihe von Radialbohrungen enthält, in denen Rast- oder Fangkugeln sitzen. Durch entsprechende keglige Ausgestaltung der Bohrungen wird dafür gesorgt, dass die Kugeln nur ein bestimmtes Stück weit in den Einsteckraum für den Stecker vordringen können.

Außen auf dem Grundkörper befindet sich eine längsverschiebliche Steuerhülse, die eine in Umfangsrichtung umlaufende Nut enthält. In der entkuppelten Stellung befindet sich die Steuerhülse in einer Stellung, in der die Nut mit den Kugeln fluchtet. Die Kugeln können dadurch in radialer Richtung frei bewegt werden. Auf der Außenseite ist die Steuerhülse durch eine Betätigungshülse umgeben, die über eine Feder mit der Betätigungshülse in einer Bewegungsrichtung gekuppelt ist. Beim Einstecken des Steckers wird die Steuerhülse federelastisch durch den Stecker in die Kupplungsstellung vorgespannt. Sobald die Halterille am Stecker den Kugeln gegenüber steht, springt die Betätigungshülse in die Verriegelungsstellung, in der an der Steuerhülse ein Bereich neben der Nut den Kugeln gegenüber steht.

Zum Entkuppeln muss die Betätigungshülse in Richtung auf den Stecker zu bewegt werden, wobei sie über die Federn die Steuerhülse mitnimmt.

Die Entriegelung erfolgt bei der bekannten Anordnung durch eine Bewegung der Betätigungshülse zu dem Stecker hin, so dass eine Entriegelung durch einen Schlag auf eine Fläche der Betätigungshülse erfolgen kann, die dem Stecker gegenüber liegt. Außerdem erfordert die bekannte Anordnung in radialer Richtung verhältnismäßig viel Bauraum.

Ausgehend hiervon ist es Aufgabe der Erfindung ein Buchsenteil für eine Fluidkupplung zu schaffen, die weniger radialen Bauraum erfordert, wobei das Risiko einer ungewollten Entkupplung kleiner ist.

Eine weitere Aufgabe der vorliegenden Erfindung ist es, eine Fluidkupplung mit einem derartigen Buchsenteil und einem hiefür geeigneten Stecker zu schaffen.

Diese Aufgaben werden erfindungsgemäß durch ein Buchsenteil mit den Merkmalen des Anspruches 1 und eine Fluidkupplung nach Anspruch 22 gelöst.

Das neue Buchsenteil weist einen mit einer Durchgangsbohrung versehenen Grundkörper auf. Der Grundkörper bildet im vorderen Bereich einen Aufnahmeraum, dessen Mündung nach vorne zeigt. Im Mündungsbereich sind mehrere Querbohrungen enthalten, die Verriegelungsglieder aufnehmen. Die Länge der Verriegelungsglieder ist größer als die Wandstärke des Buchsenteils im Bereich der Querbohrungen, womit die Verrieglungsglieder wahlweise nach innen in die Aufnahmeraum vorstehen können, wenn sie an der Rückseite mit dem Buchsenkörper bündig sind, oder nach außen über die Außenseite des Buchsenkörpers im Bereich der Querbohrungen überstehen, wenn sie mit der Innenumfangsfläche der Aufnahmeraum bündig sind. Wegen dieser Anordnung können die Verriegelungskörper, vorzugsweise Kugeln, den Stecker in der gleichen Weise verriegeln, wie dies aus dem Stand der Technik grundsätzlich bekannt ist. Sie greifen in eine entsprechende Rille am Mundstück des Steckerteils ein.

Die Steuerung der Verriegelungsglieder geschieht durch einen Steuerring, der auf der Außenseite des Grundkörpers sitzt und gegenüber der Betätigungshülse beweglich ist. Seine Steuerfläche ist von einer ringförmigen Scheitelfläche einer nach innen zeigenden Rippe des Steuerrings gebildet, die einen trapezförmig oder trapezähnlichen Querschnitt aufweist. Beidseits der Rippe sind zwei Zylinderflächen vorgesehen, deren Erzeugende parallel zu der Achse des Buchsengrundkörpers liegen und deren radialer Abstand so bemessen ist, dass der Verriegelungskörper nicht in die Aufnahmeraum vorragen, wenn sie an diesen Flächen anliegen.

Aufgrund dieser neuen Bauart wird Raum geschaffen, in den das Mundstück des Steckers kraftlos eingeführt werden kann. Dies ermöglicht eine Vorzentrierung des Steckerteils im Buchsenteil, was es dem Benutzer ermöglicht, die Steckverbindung praktisch blind zusammenzustecken. Der Betätigungshub, über den der Benutzer Kraft aufbringen muss, um den Stecker in die verriegelte Stellung zu bringen, ist verhältnismäßig sehr kurz, vorzugsweise kleiner als der Kugeldurchmesser falls als Verriegelungskörper Kugeln verwendet werden.

Die geringe Anzahl von Bauteilen begünstigt eine Miniaturisierung. Insbesondere kann der Außendurchmesser des Mündstücks des Steckers sehr klein gewählt werden, da sich die gesamte Verriegelungsmechanik auf der Außenseite des Buchsenteils befindet, wo naturgemäß mehr Platz ist als im Inneren des Buchsenteils.

Die Herstellung und Montageverhältnisse und auch die Bedienung vereinfachen sich, wenn der Buchsengrundkörper eine im Wesentlichen rotationssymmetrische Außenumfangsfläche aufweist. Die Bohrung in dem Buchsengrundkörper kann ebenfalls rotationssymmetrisch sein.

Das Unterbringen von Federn und Teilen im Inneren des Buchsengrundkörpers kann vereinfacht werden, wenn die Durchgangsbohrung eine Stufenbohrung ist, die eine in Richtung von der Mündung wegzeigende Schulterfläche bildet.

Um Teile im Inneren des Buchsengrundkörpers unterbringen zu können, ist es zweckmäßig, wenn der Buchsengrundkörper an seinem von der Aufnahmeraum abliegenden Ende mit einem Endstück versehen ist.

Dieses Endstück kann gleichzeitig eine Anschlagfläche für eine Vorspannfeder der Betätigungshülse bilden.

Eine einfache Bedienung wird erreicht, wenn die Betätigungshülse auf dem Buchsengrundkörper längsverschieblich ist.

Um die Betätigungshülse in die Verrieglungsstellung bzw. bei entnommenem Stecker in die Stellung mit frei beweglichen Verrieglungsgliedern vorzuspannen, kann die Betätigungshülse eine innen liegende Schulterfläche aufweisen an der sich eine Feder abstützen kann.

Die Betätigungshülse enthält im einfachsten Falle an ihrem dem Aufnahmeraum benachbarten Ende den Steuerring, der bezüglich der Betätigungshülse axial bewegbar ist.

Zur Unterbringung des Steuerrings kann eine ringförmige Kammer vorhanden sein, in der der Steuerring verschieblich sitzt.

Die Steuerkammer wird zweckmäßigerweise von der Betätigungshülse selbst und einer auf die Betätigungshülse aufgeschraubten Überwurfmutter begrenzt.

Um den Steuerring bei eingekuppeltem Stecker an der richtigen Stelle zu halten, kann eine Vorspannfeder vorgesehen sein.

Die Steuerfläche am Steuerring kann eine Ringfläche sein, deren Erzeugende parallel zur Längsachse des Buchsengrundkörpers verläuft.

Falls keine Vorspannfeder zum Einsatz kommen soll, kann die Steuerfläche am Steuerring eine Ringfläche sein, deren Erzeugen unter einem spitzen Winkel zu der Längsachse des Buchsengrundkörpers verläuft derart, dass durch eine radial nach außen wirkende Kraft an dem Verriegelungskörper der Steuerring in Richtung von dem Aufnahmeraum weg vorgespannt ist.

Ein Verkippen des Steuerrings in der Ringkammer der Betätigungshülse wird verhindert, wenn der Steuerring mit einer zylindrischen Außenumfangsfläche versehen ist, die mit einer zylindrischen Innenfläche an der Betätigungshülse zusammenwirkt.

Der oder die Verrieglungskörper können vorzugsweise von einer Kugel gebildet sein, wodurch sich die Herstellung sehr stark vereinfacht.

Damit die Kugeln nicht in den Innenraum gelangen können, sind die Querbohrungen an ihren in den Aufnahmeraum mündenden Enden mit einem verminderten Durchmesser versehen.

Ein vereinfachtes Zusammenstecken lässt sich erreichen, wenn die Betätigungshülse mit einer Steuerfläche versehen ist, die mit einem einsteckbaren Stecker zusammenwirkt, wobei die relativen Abmessungen an dem Stecker und der Steuerhülse derart bemessen sind, dass beim Einstecken des Steckers die Betätigungshülse in Richtung von der Aufnahmeraum weg bewegt wird, um eine Verriegelung zu ermöglichen.

Der neue Buchsenteil erfüllt gleichzeitig eine Absperrfunktion, indem erfindungsgemäß im Inneren des Buchsengrundkörpers ein Ventil enthalten ist. Die neue Verrieglungseinrichtung mit dem außen sitzenden Steuerring gestattet die Bildung einer Kupplung, die eine sehr geringe Leckrate aufweist, vergleichbar der Leckrate einer Flat-Face-Kupplung. Allerdings werden die Nachteile der Flat-Face-Kupplung vermieden, die in der hohen Anzahl von Bauteilen liegen. Außerdem wird der Nachteil vermieden, dass sich die Flat-Face-Kupplung wegen des innen liegenden Steuerrings für die Verriegelungsglieder nicht miniaturisieren lässt.

Das Ventil setzt sich aus einem ringförmigen Ventilverschlussglied zusammen, das abgedichtet in dem Buchsengrundkörper bewegbar ist. Es kann durch eine Feder in die Schließstellung vorgespannt sein.

Zu dem Ventil gehört zweckmäßigerweise ein in dem Buchsengrundkörper gehaltener Stößel, mit dem gegebenenfalls ein in dem zusammenwirkenden Stecker enthaltenes Ventil geöffnet wird.

Ein flaches Steckgesicht wird erreicht, wenn das Ventil so gestaltet ist, dass es in der geschlossenen Stellung ein in Richtung auf die Mündung des Aufnahmeraums zeigende Fläche trägt, die mit der benachbarten Stirnfläche des Stößels bündig ist.

Ein für das Buchsenteil geeigneter Stecker kann ein rohrfömiges Mundstück aufweisen, das im Abstand von dem freien Ende des Mundstücks mit einer umlaufenden Rille versehen ist, wobei der Stecker ferner eine Steuerschulter trägt.

Wenn das Steckerteil ein Ventil enthält, wird bei getrennter Kupplung der an den Steckerteil angeschlossene Kreislauf abgedichtet verschlossen.

Das Ventil kann ein Ventilverschlussglied umfassen, das zwischen zwei Stellungen hin und her bewegbar ist, wobei es in der ersten Stellung das Mundstück verschließt und mit seiner Stirnseite mit der Stirnseite des Mündstücks bündig ist.

Das Mundstück kann eine Bohrung enthalten, die größer ist als der Außendurchmesser des Stößels im Buchsenteil.

Dem Ventilverschlussglied kann eine Feder zugeordnet sein, durch das es in die Schließstellung vorgespannt ist.

Günstige Abdichtungsverhältnisse ergeben sich, wenn das Ventilverschlussglied mit einer axial sich erstreckenden Ventilsitzfläche am Mundstück zusammenwirkt.

Das Ventilverschlussglied kann eine Ringnut enthalten, in der eine O-Ring Dichtung angeordnet ist.

Um ein Verkanten des Ventilverschlussglieds zu verhindern, kann es mit einem Führungskragen versehen sein, der Durchgangsöffnungen enthält. Einfache Montageverhältnisse ergeben sich, wenn das Steckerteil eine durchgehende Bohrung enthalten kann, die als Stufenbohrung ausgeführt sein kann, wobei die Schulter am Übergangsbereich zwischen den Bohrungsabschnitten mit unterschiedlichen Durchmessern von dem Mündungsbereich des Mündstücks weg zeigen kann.

Im Übrigen sind Weiterbildungen der Erfindungen Gegenstand von Unteransprüchen.

In der nachfolgenden Figurenbeschreibung ist ein grundlegendes Ausführungsbeispiel der Erfindung erläutert. Die Beschreibung beschränkt sich dabei auf das Wesentliche zum Verständnis der Zeichnungen. Weitere nicht beschriebenen Details, insbesondere Bemessungsvorschriften können der Zeichnung entnommen werden, wie dies der Fachmann auf dem Gebiet des Maschinenbaus gewohnt ist.

In den Zeichnungen veranschaulichen:
- Fig. 1: eine erfindungsgemäße Fluidkupplungsanordnung zu der ein Stecker und ein Buchsenteil gehören, je- weils teilweise aufgeschnitten;
- Fig. 2: den Buchsenteil nach Fig. 1, in einer Explosions- darstellung;
- Fig. 3: den Steckerteil in einer Explosionsdarstellung und
- Fig. 4 bis 7: die Fluidkupplung nach Fig. 1 in unter- schiedlichen Positionszuständen, jeweils im Längsschnitt.

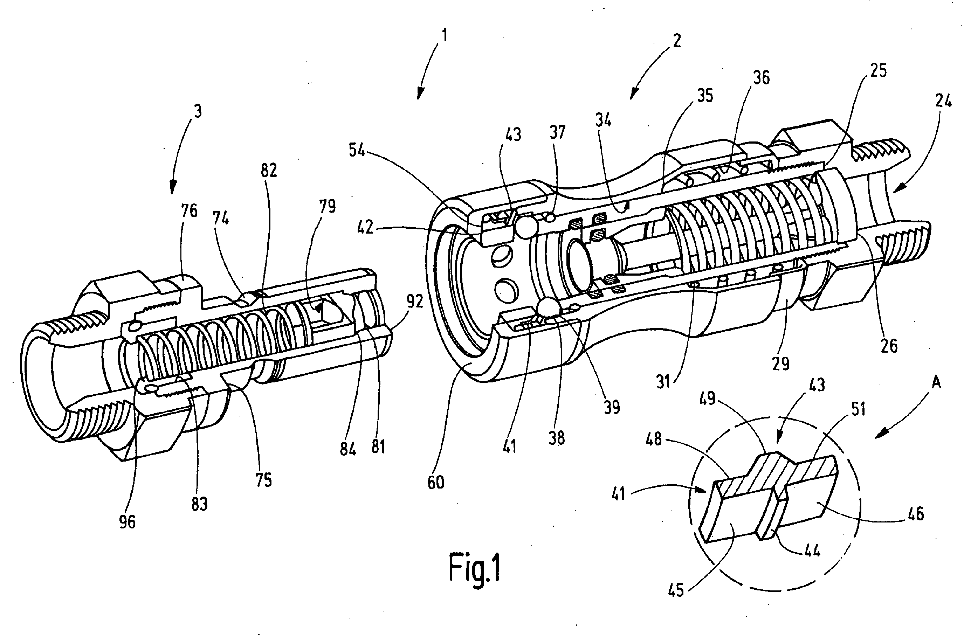

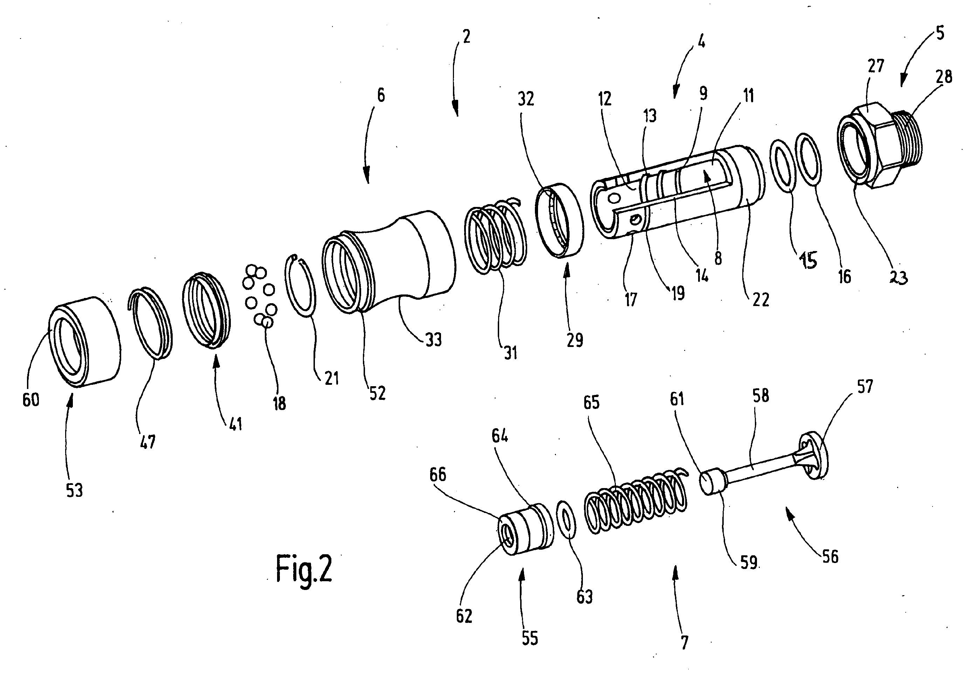

Fig. 1 veranschaulicht eine Fluidkupplung 1, zu der ein Buchsenteil 2 und ein Steckerteil 3 gehören. Das Buchsenteil ist in Fig. 2 in einer Explosionsdarstellung gezeigt. Wie dort zu erkennen ist, gehören zu dem Buchsenteil 2 ein Grundkörper 4, ein hinteres Endstück 5, eine Betätigungshülse 6 sowie ein in dem Buchsenteil 2 enthaltenes Ventil 7.

Das Buchsenteil 2 und das Steckerteil 3 sind teilweise längs geschnitten, um den inneren Aufbau zu veranschaulichen. Dabei wurde auch auf eine an den Schnittflächen üblicherweise darzustellende Schraffur verzichtet, um die Darstellung nicht unübersichtlich zu machen; dies gilt auch für die übrigen Figuren.

Der Grundkörper 4 ist ein im Wesentlichen zylindrisches Rohr mit einer durchgehenden Stufenbohrung 8, die gleichzeitig den Fluidkanal bildet. Die Stufenbohrung lässt eine konisch schräge Schulter 9 entstehen, die zum hinteren Ende des Grundkörpers 4 zeigt, d.h., bezogen auf die Darstellung in Fig. 2, zum rechten Ende. Hierdurch wird die Stufenbohrung 8 in einen Abschnitt 11 und einen Abschnitt 12 aufgeteilt. Der Abschnitt 11 ist im Übrigen zylindrisch glatt.

Der Bohrungsabschnitt 12 der Stufenbohrung 8 bildet gleichzeitig die Einstecköffnung bzw. den Aufnahmeraum für den Steckerteil 3.

Der Abschnitt 12 enthält zwei umlaufende voneinander beabstandete Ringnuten 13 und 14, in denen O-Ringe 15 und 16 sitzen.

Entsprechend der Kontur des Steckerteils 3 kann vorteilhafterweise sich der Bohrungsabschnitt 12 in dem Bereich zwischen der Ringnut 13 und der Mündung nochmals geringfügig um wenige 10-tel Millimeter erweitern, um das Einstecken zu vereinfachen. Der Durchmesserunterschied ist so gering, dass er bei der Darstellung in der Zeichnung praktisch verschwindet. Lediglich am Steckerteil 3 kann die Durchmesservariation veranschaulicht werden.

Da die Durchmesseränderung im Weiteren nicht relevant ist, wird davon ausgegangen, dass der Bohrungsabschnitt 12 im Wesentlichen zylindrisch ist durchgeht.

Im vorderen Bereich führen durch den Grundkörper 4 mehrere, beispielsweise 6 Querbohrungen 17, deren Achse auf der Längsachse des Grundkörpers 4 senkrecht steht. Die Querbohrungen 17 verjüngen sich geringfügig an jener Stelle, an der sie in dem Abschnitt 12 der Stufenbohrung 8 einmünden, damit darin sitzende Kugeln 18 nicht nach innen in die Stufenbohrung 8 hineinfallen können. Die Durchmesserveränderung ist zu klein um in den Figuren erkennbar zu sein. Es kann sich hierbei zum Erzeugen der Verjüngung um eine kegelförmige Gestalt der Querbohrung 17 handeln oder um eine kleine Ringschulter am innen liegenden Ende der Querbohrung 17.

Auf seiner Außenumfangsfläche ist der Grundkörper 4 im Wesentlichen zylindrisch glatt, mit Ausnahme einer im Querschnitt halbkreisförmigen Ringnut 19, die, ausgehend von der Mündung des Aufnahmeraums 12, knapp hinter den Querbohrungen 17 liegt. Sie dient der Aufnahme eines drahtförmigen Sprengrings 21, der als Anschlag für die Betätigungshülse 6 dient. Am hinteren Ende ist der Grundkörper 4 mit einem Außengewinde 22 versehen, auf das dass Endstück 5 aufschraubbar ist.

Das Endstück 5 enthält ein auf das Außengewinde 22 passendes Innengewinde 23, das in einen im Durchmesser weiteren Teil einer Stufenbohrung 24 (Fig. 1) eingearbeitet ist. Die Stufenbohrung bildet gemäß Fig. 1 eine radial außen liegende Schulter 25 und eine radial weiter innen liegende Schulter 26. Außen ist das Endstück 5 mit einem Betätigungssechskant 27 versehen, an den sich ein Außengewinde 28 anschließt, das gleichzeitig als Anschlussgewinde für den Buchsenteil 2 dient.

Das Endstück 5 bildet gleichzeitig einen Anschlag für einen Schutzkragen 29 der auf dem Grundkörper 4 sitzt, und der sich an dem Endstück 5 abstützt. Der Schutzkragen 29 begrenzt zusammen mit der Außenumfangsfläche des Grundkörpers 4 einen Ringspalt, der eine Vorspannfeder 31 aufnimmt. Eine in dem Schutzkragen 29 befindliche Schulter 32 dient dabei als Anlage für die Vorspannfeder 31.

Die Betätigungshülse sitzt verschiebbar auf dem Grundkörper 4. Ihr Querschnitt ergibt sich im Wesentlichen aus Fig. 1. Durch die Betätigungshülse 6, die an der Außenseite mit einer umlaufenden Griffmulde 33 versehen ist, führt eine Stufenbohrung 34 hindurch. Die Stufenbohrung 34 bildet am hinteren Ende eine Schulter 35, an der sich die Stufenbohrung 34 in einen Bohrungsabschnitt 36 erweitert, der, wie die Figur zeigt, im montierten Zustand den Kragen 29 übergreift und einen Ringraum zur Aufnahme der Vorspannfeder 31 bildet. Die Vorspannfeder 31 stützt sich an der Schulter 35 ab.

Auch am vorderen Ende enthält die Betätigungshülse 6 eine Schulter 37, die zusammen mit dem Sprengring 31 als Anschlaganordnung dient. Hierdurch wird die Bewegung der Betätigungshülse 6 in Richtung auf die Mündung des Aufnahmeraums 12 begrenzt.

Im Abstand zu der Schulter 37 enthält die Stufenbohrung 34 eine Ausdrehung 38, die vom vorderen, freien Ende der Betätigungshülse 6 bis zu einer kleinen umlaufenden Schulter 39 reicht. Die Ausdrehung 38 dient der Aufnahme eines Steuerrings 41, dessen Querschnitt sich im Wesentlichen aus der Größendarstellung von Fig. 1 ergibt. Der Steuerring 41 besteht aus einem einzigen Drehteil und setzt sich gedanklich aus einem zylindrischen Rohrabschnitt 41, einer radial nach innen vorstehenden trapezförmigen Rippe 43 und einer im Querschnitt rechteckigen und radial nach außen vorstehenden Rippe 44 zusammen.

Der Querschnitt des Steuerrings 41 ist in dem gestrichelten Kreis A von Fig. 1 stark vergrößert heraus gezeichnet.

Neben der im Querschnitt rechteckigen Rippe 44 erstrecken sich zwei zylindrische Führungsflächen 45 und 46 die denselben Durchmesser haben. Die zylindrische Fläche 46 dient als Führungsfläche mit der der Steuerring 41 in der Ausdrehung 38 längsverschieblich geführt ist. Die Rippe 44 fungiert als Anschlag an dem freien Stirnende der Betätigungshülse 6 und auch als Anschlag für eine Vorspannfeder 47, die, gesehen aus der Sicht der Betätigungshülse 6 distal an der Rippe 44 anliegt.

Zur Steuerung der Lage der Kugeln 18 weist der Streuerring 41 drei Steuerflächen 48, 49 und 51 auf. Sämtliche Steuerflächen sind Zylinderflächen, deren Erzeugende parallel zur Längsachse des Grundkörpers 4 bzw. der Betätigungshülse 6 liegen. Die beiden Steuerflächen 48 und 51 haben den gleichen Durchmesser, während die Steuerfläche 49 gegenüber der durch die beiden Steuerflächen 48 und 51 definierten Zylinderfläche radial nach innen vorspringt. Der Durchmesser der Zylinderfläche, die von der Steuerfläche 49 definiert wird, entspricht dem Außendurchmesser des Grundkörpers 4 im Bereich der Querbohrungen 17. Im Übrigen ergibt sich die genaue Dimensionierung aus der weiter unten gegebenen Funktionsbeschreibung.

Um dem Steuerring 41 und die Vorspannfeder 47 vor dem Stirnende der Betätigungshülse 6 zu halten, ist auf einem Außengewinde 52 am vorderen Ende der Betätigungshülse 6 eine Überwurfmutter 53 aufgeschraubt, die in ihrem Inneren eine Anlageschulter 54 für die Vorspannfeder 47 bildet. Die lichte Weite der Überwurfmutter 53 entspricht dem Außendurchmesser des Grundkörpers 4, so dass der Grundkörper 4 durch die Überwurfmutter 53 hindurch geschoben werden kann.

Das Ventil 7 setzt sich aus einem Ventilverschlussglied 55 und einem Stößel 56 als Hauptbestandteile zusammen. Der Stößel 56 ist ein einstückigen Teil aus einem plattenförmigen Stößelfuß 57, durch den mehrere Längsbohrungen hindurch führen. An einer Flachseite des Stößelfußes 57 steht einstückig eine Stange 58 vor, die an ihrem freien Ende einen Stößelkopf 59 mit einer ebenen Stirnfläche 61 trägt.

Das Ventilverschlussglied 55 ist ein rohrförmigen Gebilde mit einer Durchgangsbohrung, deren vorderer Abschnitt 62 geringfügig größer ist als der Außendurchmesser des im Wesentlichen zylindrischen Stößelkopfes 59. In dem vorderen Bohrungsabschnitt 62 ist eine umlaufende Ringnut zur Aufnahme einer O-Ring Dichtung 63 enthalten, die gegen den Stößelkopf 59 abdichtet.

Eine am hinteren Ende des Ventilverschlussglieds 55 vorgesehene Schulter 64 begrenzt die Bewegung des Ventilverschlussglieds innerhalb des Grundkörpers 4 in Richtung auf die Mündung der Aufnahmeraum 12. Die Schulter 64 wirkt mit der Schulter 9 zusammen. Mittels einer Schraubenfeder 65 ist das Ventilverschlussglied 55 in die Absperrstellung vorgespannt.

Im montierten Zustand ist der Stößel 56 mit seinem Stößelfuß 57, wie Fig. 1 erkennen lässt, zwischen dem rückwärtigen Ende des Grundkörpers 4 und der betreffenden Schulter 26 des Endstücks 5 eingespannt. Mit Hilfe der Stange 58 wird der Stößelkopf 59 so gehalten, dass seine Stirnfläche 61 etwa bündig ist mit dem hinteren Rand der Ringnut 13, die den O-Ring 15 enthält. In dem Ringspalt zwischen dem Stößelkopf 59 und der Aufnahmeraum 12 sitzt das rohrförmige Ventilverschlussglied 55. Wenn das Ventilverschlussglied 55 mit seiner Schulter 64 an der Schulter 9 anliegt, ist seine plane, ringförmige Stirnfläche 66 mit der Stirnfläche 61 des Stößelkopfes 59 bündig. In dieser Stellung dichtet der O-Ring 63, wie Fig. 1 erkennen lässt, gegen die Außenumfangsfläche des Stößelkopfes 59 ab, während andererseits die Außenumfangsfläche des Ventilverschlussglieds 55 über die O-Ring Dichtung 16 in dem Grundkörper 4 abgedichtet ist. Die Vorspannfeder 65 spannt das Ventilverschlussglied 55 in eine Stellung vor, in der die Schulter 64 an der Schulter 9 anliegt. Die Überwurfmutter 53 steht mit ihrer planen Stirnseite 60 über das vordere Ende des Buchsengrundköpers 4 geringfügig über.

Die Montage des Buchsenteils 2 sieht etwa wie folgt aus:

Zunächst werden die O-Ringe 15 und 16 in die zugehörigen Ringnuten 13 und 14 eingelegt und anschließend wird der Sprengring 21 in die Ringnut 19 eingesetzt. Sodann wird die Betätigungshülse 6 vom hinteren Ende her auf den Grundkörper 4 aufgeschoben und es wird die Feder 31 sowie der Schutzkragen 39 aufgesteckt.

In die Stufenbohrung 8 wird das mit dem O-Ring 63 versehene Ventilverschlussglied 55 mit seiner Stirnfläche 66 voraus eingesteckt, es wird die Vorspannfeder 65 eingelegt und es wird der Stößel 56 eingeführt. Anschließend wird auf den Grundkörper 4 das Endstück 5 aufgeschraubt, wobei sowohl die Feder 65 als auch die Feder 31 die entsprechende Vorspannkraft bekommen.

Nach diesem ersten Montageschritten werden die Verrieglungskugeln 18 eingelegt, der Steuerring von vorne her auf den Grundkörper 4 aufgeschoben, die Schraubenfeder 47 aufgesetzt und die Überwurfmutter 53 aufgeschraubt.

Am Schluss der Montage wird das in Fig. 1 gezeigte Gebilde erhalten, wobei Fig. 1 die Ruhestellung zeigt.

Wie zu erkennen ist, liegt die Betätigungshülse 6 mit ihrer Schulter 37 an dem Sprengring 21 an. Sie wird in dieser Lage durch die Vorspannfeder 31 gehalten, die sich an dem Endstück 5 über die Schulter 32 des Kragens 29 abstützt. Die in der Kraft schwächere Vorspannfeder 47 drückt den Steuerring 41 gegen das Stirnende der Betätigungshülse 6, wobei die Zylinderfläche 46 in die Ausdrehung 38 eingeschoben ist, bis die Ringschulter 44 an der Stirnseite der Betätigungshülse 6 anliegt. In dieser gezeigten Ruhestellung steht die zylindrische Steuerfläche 51 den Querbohrungen 17 gegenüber. Die Steuerfläche 51 befindet sich in einem solchen Abstand von der Außenumfangsfläche des Grundkörpers 4, dass die Verrieglungskugeln 18, von denen je eine in einem zugehörigen Querbohrung 17 sitzt, nicht in die Aufnahmeraum 12 vorragen, wenn sie an der Steuerfläche 51 anliegen. Die trapezförmige Rippe 43 mit der Steuerfläche 49 befindet sich zwischen den Verrieglungskugeln 18 und dem freien Stirnende des Grundkörpers 4 bzw. der Mündung der Aufnahmeraum 12.Sie liegt leicht an den Kugeln 18 an.

Wie für den Fachmann unschwer zu erkennen, sind sämtliche Teile des Buchsenteils 2 im Wesentlichen rotationssymmetrisch.

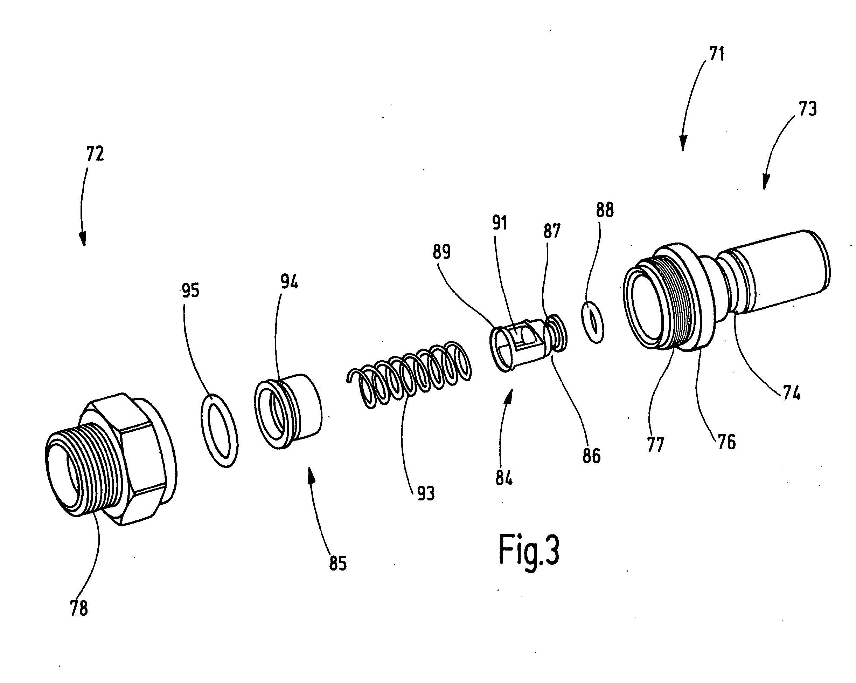

Fig. 3 veranschaulicht den Steckerteil 3 in einer Explosionsdarstellung. Wie gezeigt, setzt sich der Steckerteil 3 aus einem Steckergrundkörper 71 und einem darauf geschraubten Endstück 72 als Hauptbestandteile zusammen.

Der Steckergrundkörper 71 bildet ein rotationssymmetrisches Mundstück 73, das im hinteren Bereich eine umlaufende Rille 74 enthält. Die Rille 74 wirkt mit den Kugeln 18 zusammen. Im Bereich der Rille 74 ist der Außendurchmesser des rotationssymmetrischen Mundstücks 73 etwas größer als im Bereich zwischen der Rille 74 und dem freien Ende. In jedem Falle ist der Außendurchmesser des Mundstücks 73 so gewählt, dass das Mundstück 73 abdichtend in die beiden O-Ringe 15 und 16 hineinpasst, wenn die Rille 74 fluchtend mit den Kugeln 18 ausgerichtet ist.

Im Anschluss an die Rille 74 und im Abstand dazu, geht der Steckergrundkörper 71 in eine radial nach außen weg stehende Steuerschulter 75 über, die an einem Bund 76 ausgebildet ist. Auf der Rückseite des Bunds 76 trägt der Steckergrundkörper 71 ein Außengewinde 77. Auf dieses Außengewinde 77 ist das Endstück 72 aufgeschraubt, das hierzu ein entsprechendes Innengewinde enthält und mit einem Außengewinde 78 versehen ist, das als Anschlussgewinde des Steckerteils 3 dient.

Durch den Steckergrundkörper 71 führt eine Stufenbohrung 79 hindurch, die sich aus einem Abschnitt 81, einem Abschnitt 82 und einem Abschnitt 83 zusammensetzt. Der Abschnitt 82 geht in den Abschnitt 81 an einer Schulterfläche 84 über, die als Anschlag für ein Ventilverschlussglied 84 dient, das in der Stufenbohrung 79 längsverschieblich sitzt. Der Abschnitt 83 dient als Aufnahmeraum für ein Widerlagerstück 85 das gegen eine innere Schulter in dem Endstück 72 anliegt.

Das Ventilverschlussglied 84 bildet einen zylindrischen Zapfen 86 mit einer umlaufenden Ringnut 87, in der eine O-Ringdichtung 88 sitzt. Die O-Ringdichtung 88 dichtet gegen die Wand des Bohrungsabschnittes 81 ab. An den Zapfen 86 schließt sich einstückig ein Führungskragen 89 an, der von Öffnungen 91 durchsetzt ist. Der Außendurchmesser des Führungskragens 89 entspricht dem Durchmesser des Bohrungsabschnitts 82. Da der Kragen 89 einen größeren Durchmesser hat, entsteht am Übergang zu dem Zapfen 86 eine Schulter, die mit der Schulter 87 zusammenwirkt. Das freie Stirnende des Zapfens 86 ist eben, ebenso wie das freie Stirnende des Mundstücks 73, das an einer ringförmigen Stirnfläche 92 endet.

Gegen den Kragen 89 wirkt eine Schraubendruckfeder 93, die sich an dem rohrförmigen Widerlagerstück 85 abstützt. Das Widerlagerstück 85 enthält eine Ringnut 94 mit einer darin sitzenden O-Ring Dichtung 95. Im montierten Zustand steckt das Widerlagerstück 85 in dem Bohrungsabschnitt 83 und ist dort, wie Fig. 1 erkennen lässt, zwischen dem Steckergrundkörper 71 und dem Endstück 72 eingezwängt. Der O-Ring 95 dichtet gegen eine entsprechende Fläche an dem Steckergrundkörper 91 ab.

Das rohrförmige Widerlagerstück 85 enthält eine radial nach innen vorstehende Rippe 96, gegen die sich die Feder 93 abstützt.

Fig 1 zeigt die Ruhestellung bzw. nicht gesteckte Stellung des Steckerteils 3. Die Feder 93 schiebt das Ventilverschlussglied 84 in die Schließstellung. Das Ventilverschlussglied 84 liegt mit der Übergangsstelle zwischen dem Kragen 89 und dem Zapfen 86 an der Schulter 84 an. In dieser Stellung ist die plane Stirnfläche des Zapfens 86 mit der Ringfläche 92 bündig. Das Ventilverschlussglied 84 dichtet gegen die Innenseite des Bohrungsabschnittes 81 mit Hilfe der O-Ringdichtung 88 ab.

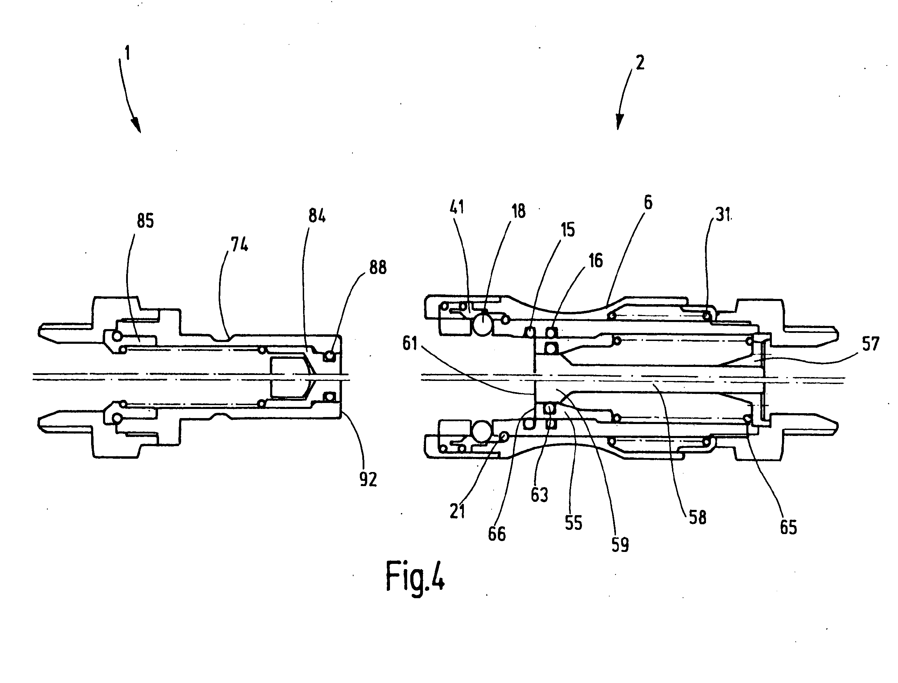

Fig. 4 zeigt diese Ausgangsstellung des Steckerteils 3 in Verbindung mit der Grund- oder Ruhestellung des Buchsenteils 2, jeweils im Axialschnitt.

Wie zu erkennen ist, steht die Stirnfläche 66 des Wentilverschlussglieds 55 unmittelbar vor der O-Ring Dichtung 15 und außerdem ist die Stirnfläche 66 mit der Stirnfläche 61 des Stößelkopfes 59 bündig. Im Querschnitt gesehen hat somit der Aufnahmeraum 12 ein nach links offenes, rechtseckiges Längsschnittsprofil.

Das Ventilverschlussglied 55 dichtet mittels des O-Rings 63 an der Umfangsfläche des Stößelkopfes 59 und mittels der Dichtung 16 in dem Grundkörper 4 ab.

In dem Steckerteil 1 ist das Ventil ebenfalls geschlossen. Das Ventilverschlussglied ist durch die Feder 93 in eine Stellung gebracht, in der die ebene Stirnseite des Zapfens 86 mit der Stirnfläche 92 am Mundstück 73 bündig ist.

Die Betätigungshülse 6 steht in einer Stellung in der die Schulter 37 an dem Sprengring 21 anliegt, und zwar durch die Wirkung der Schraubenfeder 31. Andererseits liegt der Steuerring 41 auch an der Betätigungshülse 6 an, und zwar aufgrund der Wirkung der Feder 47. Die Stirnseite 60 steht über den Buchsengrundkörper 4 über.

Wenn ausgehend von der in der Fig. 4 dargestellten Stellung das Mundstück 73 des Steckerteils 1 in den Aufnahmeraum 12 des Buchsenteils 2 eingeführt wird, entsteht zwischen dem Steckerteil 1 und dem Buchsenteil 2 ein minimaler Totraum. Der Totraum beschränkt sich im Wesentlichen auf den ringförmigen Spalt, den das Mundstück 73 zusammen mit dem O-Ring 15 und den Stirnseiten 61 und 66 begrenzt.

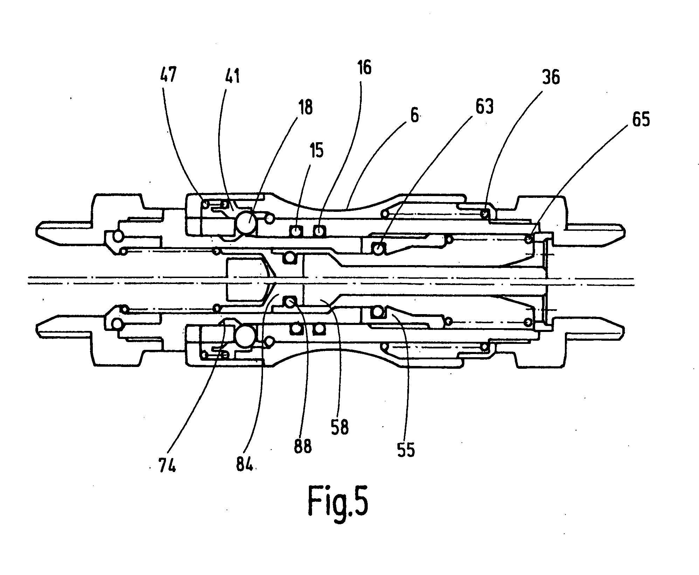

Da in der Ruhestellung des Buchsenteils 2 die Kugeln der Steuerfläche 51 gegenüberliegen, können sie beim Einführen des Steckers von dem Mundstück ohne weiteres radial in die in Fig. 4 bzw. 5 gezeigte Stellung radial nach außen zurückweichen.

Während des Einschubhubs wird das Stirnende 92 des Steckerteils 3 gegen die Stirnseite 66 des Ventilverschlussgliedes 5 gestoßen und dieses zurückgedrängt. Umgekehrt wird die Stirnfläche 61 des Stößelkopfes 59 auf die plane Stirnseite des Ventilverschlussglieds 84 in dem Steckerteil 72 stoßen und bei der weiteren Zusammensteckbewegung das Ventilverschlussglied 84 in das Steckerteil 72 gegen die Wirkung der Feder 93 zurückdrängen.

Ferner wird gegen Ende des Einschubhubs die Schulterfläche 75 gegen die Stirnseite 60 der Überwurfmutter 53 anstoßen und damit die Betätigungshülse 6 gegen die Wirkung der Schraubenfeder 31, bezogen auf Fig. 5 nach rechts, d.h. in Richtung auf das Endstück 5, drängen. Dabei wird sich die benachbarte schräge Flanke, die zwischen der Steuerfläche 51 und der Steuerfläche 49 an der Rippe 43 ausgebildet ist, gegen die Kugel 18 anlegen. Der Steuerring 41 wird deswegen gegen die Wirkung der Druckfeder 47 in der in Fig. 5 gezeigten Stellung solange gehalten, bis die Rille 74 des Mundstücks 73 mit den Kugeln 18 fluchtet, weil zuvor die Kugeln 18 nicht nach innen ausweichen können. Da dem Steuerring 41 eine Feder vorgespannt ist, ist er ständig bestrebt, der Bewegung der Betätigungshülse 6 zu folgen.

Sobald die Kugeln 18 in die Rille 74 eingefallen sind, kann der Steuerring 41 durch die Wirkung der Feder 47 wieder in die Lage zurückkehren, in der er mit seiner Rippe 44 an der Stirnseite der Betätigungshülse 6 anliegt. Wenn diese Stellung erreicht ist, steht die Steuerfläche 49 über den Kugeln 18. Da die Steuerfläche 49 auf einer Zylinderfläche entsprechend dem Außendurchmesser des Grundkörpers 4 liegt, werden so die Kugeln 18, deren Durchmesser größer ist als die Wandstärke des Grundkörpers 4 im Bereich des Aufnahmeraums 12, in dem Aufnahmeraum 12 vorragend gehalten und damit im formschlüssigen Eingriff mit der Rille 74.

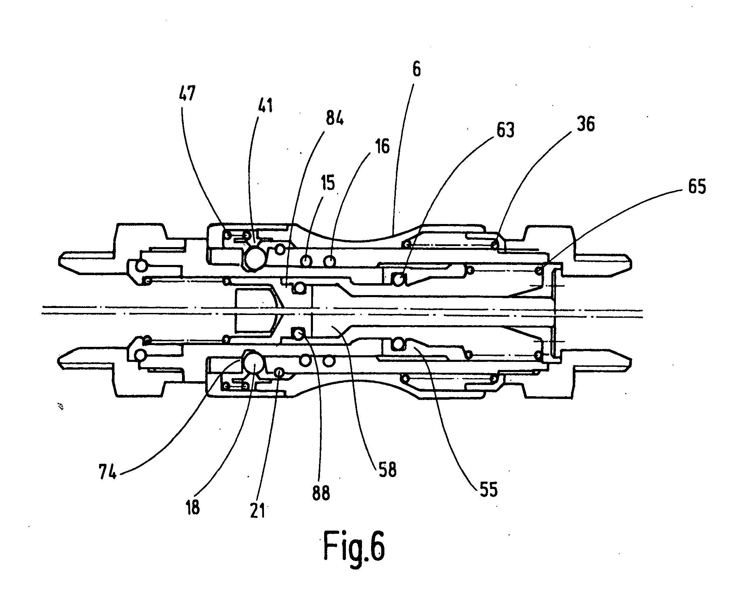

Das Ende des Einschubhubs ist erreicht, wenn die Schulter 75 des Steckerteils 3 am Stirnende des Grundkörpers 4 neben dem Aufnahmeraum 12 anstößt, wie dies Fig. 6 erkennen lässt.

Ersichtlicherweise wird die Feder 47 lediglich dafür benötigt, dass nach dem Trennen des Steuerrings 41 von der Stirnseite der Betätigungshülse 6 der Steuerring 41 in seine Ruhestellung zurückkehren kann, in der er an der Stirnseite der Betätigungshülse 6 anliegt. In dieser Endstellung fluchtet die Rippe 43 mit den Kugeln.

Auf die Gestalt der Flankenfläche, die die Steuerfläche 51 mit der Steuerfläche 49 verbindet, kommt es letztendlich nicht an. Sie hat lediglich einen Einfluss auf die erforderliche Betätigungskraft, je nachdem wie groß der Überstand der Kugel über die Außenseite des Grundkörpers 4 ist.

In der gekuppelten Stellung ist das Ventilverschlussglied 85 maximal in das Steckerteil 3 zurückgestoßen, so dass eine strömungsmäßige Verbindung an dem Stößelkopf 59 vorbei durch den Bohrungsabschnitt 82 und von dort durch die Öffnungen 91 in dem Kragen des Ventilverschlussgliedes 84 besteht.

Im Buchsenteil verläuft der Strömungskanal zwischen der Stange 58 und der Wand des Bohrungsabschnittes 81 im Steckerteil 3 und zwischen der Stange 58 und der Bohrung in dem Ventilverschlussglied 55 hindurch.

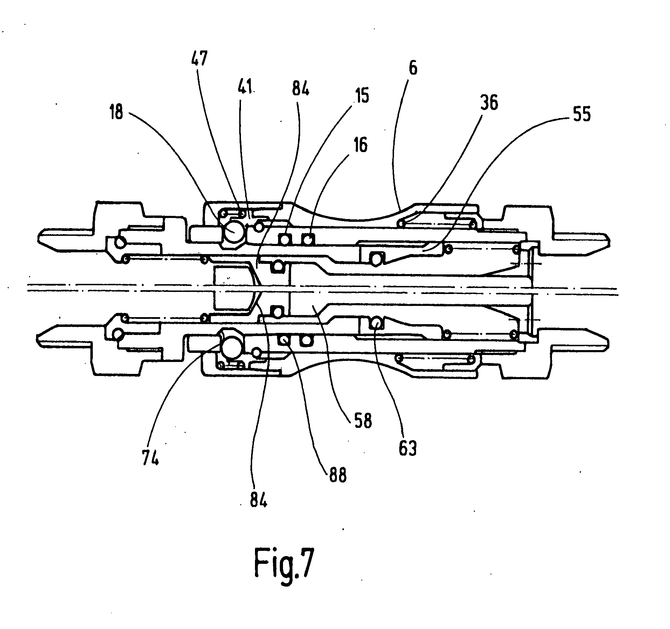

Zum Entkuppeln wird die Betätigungshülse gegen die Wirkung der Druckfeder 31 in Richtung auf das Endstück 5 gemäß Fig. 7 zurückgezogen. Am Ende der Rückzugsbewegung steht die Steuerfläche 48 des Steuerrings 41 den Kugeln 18 gegenüber. Der Durchmesser der Zylinderfläche, die die Steuerfläche 48 definiert ist so groß, dass die Kugeln 18 aus dem Lichtraumprofil des Aufnahmeraums 12 zurückgedrängt werden können. Da im Inneren der gekuppelten Kupplungseinrichtung Druck herrscht, wird durch diese Kraft der Steckerteil 3 zurückgedrängt und, da die Kugeln 18 radial nach außen ausweichen können, sind sie auch nicht mehr in der Lage sich in der Rille 74 zu verfangen und den Steckerteil 3 zu halten. Bei der Ausschubbewegung gleiten die beiden Ventilverschlussglieder 55 und 84 in ihre jeweilige Ruhestellung in dem Buchsenteil 2 bzw. den Steckerteil 3 zurück. Fluidvolumen, dass sich zwischen der Außenseite des Ventilverschlussglieds 55 und dem Bohrungsabschnitt 11 gefangen hat, wird in das Innere des Buchsenteils zurückgedrängt.

Es entsteht somit eine extrem geringe Leckage, die praktisch nur den Fasenflächen an der Stirnseite des Steckerteils 3 und dem Zwickelbereich des O-Rings 15 in seiner Nut 13 sowie dem erforderlichen Betätigungsspalt der jeweiligen Ventilverschlussglieder entspricht, und zwar jenen Teil des Spaltes, der auch außerhalb des geschlossenen Ventils liegt.

Die oben erwähnte rücktreibende Kraft für den Steuerring 41 kann auch erreicht werden, indem der Steuerring so bemessen ist, dass er beim Einsteckvorgang schlussendlich von der Überwurfmutter 53 mitgenommen wird, indem er an der Innenseite an der Schulter 54 anstößt. Durch leichtes Kippen der Steuerfläche 49 kann die an den Kugeln 18 wirkende Radialkraft dazu verwendet werden, den Steuerring 41 an der Stirnseite der Betätigungshülse 6 anliegend zu halten.

Wie für den Fachmann unschwer zu erkennen ist, kann die neue Kupplungsanordnung mit einer Hand entkuppelt werden.

Eine leckarme Fluidkupplung weist einen Stecker auf, der nach Art einer Flat-Face-Kupplung ausgebildet ist. Das Buchsenteil weist ein vertieft liegendes Ventil auf, wobei die Stirnfläche des Stößels zum Öffnen des Steckerventils und die Stirnflächen des Ventilverschlussglieds in einer gemeinsamen Ebene liegen. Das Halten des Steckers im Kupplungsteil geschieht durch Kugeln, die in eine Fangrille am Mundstück des Steckers eingreifen. Die Steuerung der radialen Lage der Kugeln geschieht mit Hilfe eines Steuerrings, der auf dem Buchsengrundkörper axial beweglich ist und der sich auch gegenüber der Betätigungshülse bewegen kann. Dadurch kann der üblicherweise im Inneren des Buchsenkörpers vorhandene Steuerring, der das Totvolumen erheblich vergrößert, entfallen.

## Patentansprüche

1. Buchsenteil (2) einer Fluidkupplung,
mit einem Buchsengrundkörper (4), der eine Bohrung (8) enthält, die an dem vorderen Ende des Buchsengrundkörpers (4) einen Aufnahmeraum (12) für einen Stecker (3) bildet,
mit wenigstens einer radial durch den Buchsengrundkörper (4) führenden Querbohrung (17), die radial in den Aufnahmeraum (12) mündet,
mit einem in der Querbohrung (17) enthaltenen Verriegelungskörper (18), dessen Erstreckung in Richtung parallel zu der Längsachse der Querbohrung (17) größer ist als die Wandstärke des Buchsengrundkörpers (4) im Bereich des Aufnahmeraums (12) und der eine in den Aufnahmeraum (12) vorragende Stellung einnehmen kann,
mit Mitteln, die eine nach innen in den Aufnahmeraum (12) gerichtete Bewegung des Verriegelungskörpers (18) begrenzen,
mit einem Steuerring (41), der außen auf dem Buchsengrundkörper (4) beweglich sitzt, der mit dem Verriegelungskörper (18) zusammenwirkt und der eine Steuerfläche (49) aufweist, die derart gestaltet ist, dass in einer Stellung des Steuerrings (41) gegenüber dem Buchsengrundköper (4), in der die Steuerfläche (49) mit dem Verriegelungsköper (18) zusammenwirkt, der verriegelungskörper (18) in einer in den Aufnahmeraum (12) vorragenden Stellung gehalten ist, wobei die Steuerfläche (49) eine Ringfläche ist, die an einer radial nach innen zeigenden Rippe (43) des Steuerrings (41) mit trapezförmigem oder trapezähnlichem Querschnitt ausgebildet ist, und wobei beidseits der Rippe (43) zwei Flächen (48,51) vorgesehen sind, deren Erzeugende parallel zu der Achse des Buchsengrundkörpers (4) liegen und deren radialer Abstand so bemessen ist, dass der Verrieglungskörper (18) nicht in den Aufnahmeraum (12) vorragt, wenn er an diesen Flächen (48,51) anliegt,
mit einer Betätigungshülse (6), die auf dem Buchsengrundkörper (4) beweglich ist und gegenüber der der Steuerring (41) beweglich ist, und
mit einem in dem Buchsengrundkörper (4) enthaltenen Ventil (7), das ein ringförmiges Ventilverschlussglied (55) aufweist, das abgedichtet in dem Buchsengrundkörper (4) bewegbar ist,
wobei der Steuerring (41) in der Betätigungshülse (6) aufgenommen ist.

2. Buchsenteil nach Anspruch 1, **dadurch gekennzeichnet, dass** der Buchsengrundkörper (4) eine im Wesentlichen rotationssymmetrische Außenumfangsfläche aufweist.

3. Buchsenteil nach Anspruch 1, **dadurch gekennzeichnet, dass** die Bohrung (8) in dem Buchsengrundkörper (4) im Wesentlichen rotationssymmetrisch ist.

4. Buchsenteil nach Anspruch 1, **dadurch gekennzeichnet, dass** die Bohrung (8), die durch den Buchsengrundkörper (4) hindurchführt, eine Stufenbohrung ist, die eine von der Mündung des Aufnahmeraums weg zeigende Schulterfläche (9) aufweist.

5. Buchsenteil nach Anspruch 1, **dadurch gekennzeichnet, dass** der Buchsengrundkörper (4) an seinem von dem Aufnahmeraum (12) abliegenden Ende mit einem Endstück (5) versehen ist.

6. Buchsenteil nach Anspruch 1, **dadurch gekennzeichnet, dass** der Buchsengrundkörper (4) außen eine Anschlagfläche (23) für eine Vorspannfeder aufweist.

7. Buchsenteil nach Anspruch 6, **dadurch gekennzeichnet, dass** die Anschlagfläche (23) von dem Endstück (5) gebildet ist.

8. Buchsenteil nach Anspruch 1, **dadurch gekennzeichnet, dass** die Betätigungshülse (6) auf dem Buchsenkörper (4) längsverschieblich ist.

9. Buchsenteil nach Anspruch 1, **dadurch gekennzeichnet, dass** die Betätigungshülse (6) mit einer Steuerfläche (60) versehen ist, die mit einem einsteckbaren Stecker (2) zusammenwirkt, wobei die relativen Abmessungen an dem Stecker (2) und der Betätigungshülse (6) derart bemessen sind, dass beim Einstecken des Steckers (2) die Betätigungshülse (6) in Richtung von der Aufnahmeraum (12) weg bewegt wird um eine Verriegelung zu ermöglichen.

10. Buchsenteil nach Anspruch 1, **dadurch gekennzeichnet, dass** die Betätigungshülse (6) eine innen liegende Schulterfläche (35) aufweist.

11. Buchsenteil nach Anspruch 1, **dadurch gekennzeichnet, dass** die Betätigungshülse (6) an ihrem der Aufnahmeraum (12) benachbarten Ende den Steuerring (41) aufweist, der bezüglich der Betätigungshülse (6) axial bewegbar ist.

12. Buchsenteil nach Anspruch 1, **dadurch gekennzeichnet, dass** der Steuerring (41) in einer ringförmigen Kammer angeordnet ist.

13. Buchsenteil nach Anspruch 12, **dadurch gekennzeichnet, dass** die ringförmige Kammer von der Betätigungshülse (6) und einer Überwurfmutter (53) begrenzt ist.

14. Buchsenteil nach Anspruch 1, **dadurch gekennzeichnet, dass** dem Steuerring (41) eine Vorspannfeder (47) zugeordnet ist.

15. Buchsenteil nach Anspruch 1, **dadurch gekennzeichnet, dass** die Steuerfläche (49) eine Ringfläche ist, deren Erzeugende parallel zur Längsachse des Buchsengrundkörpers (4) verläuft.

16. Buchsenteil nach Anspruch 1, **dadurch gekennzeichnet, dass** die Steuerfläche eine Ringfläche ist, deren Erzeugende unter einem spitzen Winkel zu der Längsachse des Buchsengrundkörpers (4) verläuft, derart, dass durch eine radial nach außen wirkende Kraft an dem Verriegelungskörper (18) der Steuerring (41) in Richtung von der Mündung des Aufnahmeraums (12) weg vorgespannt ist.

17. Buchsenteil nach Anspruch 1, **dadurch gekennzeichnet, dass** der Verrieglungskörper (18) von einer Kugel gebildet ist.

18. Buchsenteil nach Anspruch 1, **dadurch gekennzeichnet, dass** die Querbohrung (17) an ihrem in den Aufnahmeraum (12) mündenden Ende einen verminderten Durchmesser aufweist.

19. Buchsenteil ach Anspruch 1, **dadurch gekennzeichnet, dass** das Ventilverschlussglied (55) durch eine Feder (65) in die Schließstellung vorgespannt ist.

20. Buchsenteil nach Anspruch 1, **dadurch gekennzeichnet, dass** zu dem Ventil (7) ein in dem Buchsengrundköper gehalterter Stößel (56) gehört, der mit dem Ventilverschlussglied (55) zusammenwirkt derart, dass das Ventil (7) in der einen Stellung strömungsmäßig geschlossen ist und in einer anderen Stellung, in der das Ventilverschlussglied (55) aus der Ruhestellung in eine zurückgeschobene Stellung bewegt ist, ein Strömungsdurchgang durch das Ventil (7) freigegeben ist.

21. Buchsenteil nach Anspruch 20, **dadurch gekennzeichnet, dass** in der geschlossenen Stellung des Ventils (7) eine in Richtung auf den Aufnahmeraum (12) zeigende Fläche (61) des Stößels (56) bündig ist mit einer in Richtung auf den Aufnahmeraum (12) zeigenden Stirnfläche (66) des Ventilverschlussglieds (55).

22. Fluidkupplung mit einem Buchsenteil nach einem der Ansprüche 1-21 und mit einem Stecker, **dadurch gekennzeichnet, dass** der Stecker (3) ein rohrförmiges Mundstück (73) aufweist, das mit einer umlaufenden Rille (74) versehen ist, und dass eine Steuerschulter (75) vorhanden ist.

23. Fluidkupplung nach Anspruch 22, **dadurch gekennzeichnet, dass** das Steckerteil (3) ein Ventil (84) enthält.

24. Fluidkupplung nach Anspruch 23, **dadurch gekennzeichnet, dass** das Ventil (84) ein Ventilverschlussglied enthält, das zwischen zwei Stellungen hin und her bewegbar ist, wobei in der ersten Stellung das Ventilverschlussglied (84) das Steckerteil (3) absperrt und eine Stirnseite des Ventilverschlussgliedes (84) mit einer Stirnseite (92) des Mündstücks (73) bündig ist.

25. Fluidkupplung nach Anspruch 22, **dadurch gekennzeichnet, dass** das Mundstück (73) eine Bohrung (79) aufweist, die größer ist als der Außendurchmesser des Stößels (59) in dem Buchsenteil (4).

26. Fluidkupplung nach Anspruch 24, **dadurch gekennzeichnet, dass** das Ventilverschlussglied (84) durch eine Feder (93) in die Schließstellung vorgespannt ist.

27. Fluidkupplung nach Anspruch 24, **dadurch gekennzeichnet, dass** das Ventilverschlussglied (84) mit einer axial sich erstreckenden Ventilsitzfläche (81) am Mundstück (73) zusammenwirkt.

28. Fluidkupplung nach Anspruch 24, **dadurch gekennzeichnet, dass** das Ventilverschlussglied (84) eine Ringnut (87) enthält, in der eine O-Ring-Dichtung (88) angeordnet ist.

29. Fluidkupplung nach Anspruch 24, **dadurch gekennzeichnet, dass** das Ventilverschlussglied (84) mit einem Führungskragen (89) versehen ist, der Durchgangsöffnungen (91) enthält.

30. Fluidkupplung nach Anspruch 22, **dadurch gekennzeichnet, dass** der Steckerteil (3) eine durchgehende Bohrung (79) enthält, die als Stufenbohrung ausgeführt ist, wobei die Schulter (84) am Übergangsbereich zwischen den Bohrungsabschnitten (81,82) mit unterschiedlichem Durchmesser von dem Mündungsbereich des Mundstücks (73) weg zeigt.

## Claims

1. Socket part (2) of a fluid coupling,
with a socket base body (4), which contains a bore (8) forming a receiving area (12) for a connector (3) on the front end of the socket base body (4),
with at least one transverse bore (17), which runs radially through the socket base body (4) and opens radially into the receiving area (12),
with a locking body (18) contained in the transverse bore (17), the extent of which locking body in a direction parallel to the longitudinal axis of the transverse bore (17) is larger than the wall thickness of the socket base body (4) in the region of the receiving area (12) and which can occupy a position projecting into the receiving area (12),
with means, which restrict the movement of the locking body (18) inwards into the receiving area (12),
with a control ring (41), which sits externally on the socket base body (4) to be movable, cooperates with the locking body (18) and has a control surface (49) configured in such a manner that in a position of the control ring (41) opposite the socket base body (4), in which the control surface (49) cooperates with the locking body (18), the locking body (18) is held in a position projecting into the receiving area (12), wherein the control surface (49) is a ring surface configured with a trapezoid or trapezoid-like cross-section on a rib (43) of the control ring (41) pointing radially inwards, and wherein two surfaces (48, 51) are provided on both sides of the rib (43), their generatrices lying parallel to the axis of the socket base body (4) and their radial spacing being dimensioned so that the locking body (18) does not project into the receiving area (12) when it abuts against these surfaces (48, 51),
with an operating sleeve (6), which is movable on the socket base body (4) and in relation to which the control ring (41) is movable, and
with a valve (7) contained in the socket base body (4), which has a ring-shaped valve closing member (55), which is movable in the socket base body (4) in a sealed manner,
wherein the control ring (41) is received in the operating sleeve (6).

2. Socket part according to claim 1, **characterised in that** the socket base body (4) has a substantially rotationally symmetric outer peripheral surface.

3. Socket part according to claim 1, **characterised in that** the bore (8) is substantially rotationally symmetric in the socket base body (4).

4. Socket part according to claim 1, **characterised in that** the bore (8), which runs through the socket base body (4), is a stepped bore having a shoulder surface (9) pointing away from the opening of the receiving area.

5. Socket part according to claim 1, **characterised in that** the socket base body (4) is provided with an end piece (5) on its end remote from the receiving area (12).

6. Socket part according to claim 1, **characterised in that** the socket base body (4) has a stop surface (23) on the outside for a biasing spring.

7. Socket part according to claim 6, **characterised in that** the stop surface (23) is formed by the end piece (5).

8. Socket part according to claim 1, **characterised in that** the operating sleeve (6) is longitudinally displaceable on the socket body (4).

9. Socket part according to claim 1, **characterised in that** the operating sleeve (6) is provided with a control surface (60), which cooperates with an insertable connector (2), wherein the relative dimensions on the connector (2) and the operating sleeve (6) are dimensioned in such a manner that on insertion of the connector (2) the operating sleeve (6) is moved away from the receiving area (12) in order to enable locking.

10. Socket part according to claim 1, **characterised in that** the operating sleeve (6) has an internally located shoulder surface (35).

11. Socket part according to claim 1, **characterised in that** on its end adjacent to the receiving area (12) the operating sleeve (6) has the control ring (41), which is axially movable in relation to the operating sleeve (6).

12. Socket part according to claim 1, **characterised in that** the control ring (41) is arranged in a ring-shaped chamber.

13. Socket part according to claim 12, **characterised in that** the ring-shaped chamber is delimited by the operating sleeve (6) and a cap nut (53).

14. Socket part according to claim 1, **characterised in that** the control ring (41) has an associated biasing spring (47).

15. Socket part according to claim 1, **characterised in that** the control surface (49) is a ring surface, the generatrix of which runs parallel to the longitudinal axis of the socket base body (4).

16. Socket part according to claim 1, **characterised in that** the control surface is a ring surface, the generatrix of which runs at an acute angle to the longitudinal axis of the socket base body (4) in such a manner that the control ring (41) is biased away from the opening of the receiving area (12) by a force acting radially outwards on the locking body (18).

17. Socket part according to claim 1, **characterised in that** the locking body (18) is formed by a sphere.

18. Socket part according to claim 1, **characterised in that** the transverse bore (17) has a reduced diameter at its end opening into the receiving area (12).

19. Socket part according to claim 1, **characterised in that** the valve closing member (55) is biased into the closing position by a spring (65).

20. Socket part according to claim 1, **characterised in that** the valve (7) includes a tappet (56), which is mounted in the socket base body and cooperates with the valve closing member (55) in such a manner that the valve (7) is closed with respect to flow in one position and in another position, in which the valve closing member (55) is moved out of the resting position into a retracted position, a passage for flow through the valve (7) is opened.

21. Socket part according to claim 20, **characterised in that** in the closed position of the valve (7) a surface (61) of the tappet (56) pointing towards the receiving area (12) is flush with a face (66) of the valve closing member (55) pointing towards the receiving area (12).

22. Fluid coupling with a socket part according to one of claims 1-21 and with a connector, **characterised in that** the connector (3) has a tubular mouth piece (73), which is provided with a circumferential groove (74), and that a control shoulder (75) is provided.

23. Fluid coupling according to claim 22, **characterised in that** the connector part (3) contains a valve (84).

24. Fluid coupling according to claim 23, **characterised in that** the valve (84) contains a valve closing member, which is movable back and forth between two positions, wherein in the first position the valve closing member (84) blocks the connector part (3) and a face side of the valve closing member (84) is flush with a face side (92) of the mouth piece (73).

25. Fluid coupling according to claim 22, **characterised in that** the mouth piece (73) has a bore (79), which is larger than the outside diameter of the tappet (59) in the socket part (4).

26. Fluid coupling according to claim 24, **characterised in that** the valve closing member (84) is biased into the closing position by a spring (93).

27. Fluid coupling according to claim 24, **characterised in that** the valve closing member (84) cooperates with an axially extending valve seat surface (81) on the mouth piece (73).

28. Fluid coupling according to claim 24, **characterised in that** the valve closing member (84) contains an annular groove (87), in which an O-ring seal (88) is arranged.

29. Fluid coupling according to claim 24, **characterised in that** the valve closing member (84) is provided with a guide collar (?9), which contains passages (91).

30. Fluid coupling according to claim 22, **characterised in that** the connector part (3) contains a through bore (79) configured as a stepped bore, wherein the shoulder (84) at the transition region between the bore sections (81, 82) with different diameter points away from the opening region of the mouth piece (73).

## Revendications

1. Partie en forme de douille (2) d'un coupleur hydraulique, qui comporte :
- un corps de base de douille (4) avec, à son extrémité avant, un alésage (8) qui forme un volume d'accueil (12) pour recevoir une fiche mâle (3),
- au moins un perçage transversal (17) traversant radialement le corps de base de douille (4) pour déboucher dans le volume d'accueil (12),
- contenu dans le perçage transversal (17), un corps de verrouillage (18) dont la dimension, parallèlement à la direction longitudinale du perçage transversal (17), est supérieure à l'épaisseur que présente la paroi du corps de base de douille (4) dans la zone du volume d'accueil (12) et qui peut prendre une position faisant saillie dans ce volume,
- des moyens limitant le déplacement du corps de verrouillage (18) en direction de l'intérieur du volume d'accueil (12),
- mobile extérieurement sur le corps de base de douille (4), une bague de commande (41) qui coopère avec le corps de verrouillage (18) et présente une portée de commande (49) configurée de manière que quand cette bague de commande (41) occupe par rapport au corps de base de douille (4) une position dans laquelle la portée de commande (49) coopère avec le corps de verrouillage (18), celui-ci se trouve maintenu dans une position où il fait saillie dans le volume d'accueil (12), la portée de commande (49) étant une surface annulaire à section en forme de trapèze ou analogue, réalisée sur une nervure (43) de la bague de commande (41) et dirigée radialement vers l'intérieur, avec de part et d'autre de la nervure (43), deux portées (48, 51) dont les génératrices sont parallèles à l'axe du corps de base de douille (4) et dont l'espacement radial est tel que le corps de verrouillage (18) ne fait pas saillie dans le volume d'accueil (12) quand il est en contact avec ces portées (48, 51),
- une douille d'actionnement (6) qui peut se déplacer sur le corps de base de douille (4) et par rapport à la bague de commande (41),
- logée dans le corps de base de douille (4), une soupape (7) présentant un organe de fermeture de soupape (55) en forme d'anneau, qui peut se déplacer avec étanchéité dans le corps de base de douille (4),
étant précisé que la bague de commande (41) est logée dans la douille d'actionnement (6).

2. Partie en forme de douille selon la revendication 1, **caractérisée en ce que** le corps de base de douille (4) présente une surface externe essentiellement de révolution.

3. Partie en forme de douille selon la revendication 1, **caractérisée en ce que** l'alésage (8) dans le corps de base de douille (4) est essentiellement de révolution.

4. Partie en forme de douille selon la revendication 1, **caractérisée en ce que** l'alésage (8) traversant le corps de base de douille (4) est un alésage étagé qui présente une surface d'épaulement (9) située à l'opposé de l'embouchure du volume d'accueil.

5. Partie en forme de douille selon la revendication 1, **caractérisée en ce que** le corps de base de douille (4), à son extrémité éloignée du volume d'accueil (12), est doté d'une pièce d'extrémité (5).

6. Partie en forme de douille selon la revendication 1, **caractérisée en ce que** le corps de base de douille (4) présente extérieurement une portée de butée (23) pour un ressort de précontrainte.

7. Partie en forme de douille selon la revendication 6, **caractérisée en ce que** la portée de butée (23) est constituée par la pièce d'extrémité (5).

8. Partie en forme de douille selon la revendication 1, **caractérisée en ce que** la douille d'actionnement (6) peut coulisser longitudinalement sur le corps de douille (4).

9. Partie en forme de douille selon la revendication 1, **caractérisée en ce que** la douille d'actionnement (6) est équipée d'une portée de commande (60) qui coopère avec une fiche (3) emmanchable, les dimensions relatives de la fiche (3) et de la douille d'actionnement (6) étant telles que lors de l'emmanchement de la fiche (3), la douille d'actionnement (6) est déplacée dans le sens qui l'éloigne du volume d'accueil (12) pour permettre un verrouillage.

10. Partie en forme de douille selon la revendication 1, **caractérisée en ce que** la douille d'actionnement (6) présente à l'intérieur une portée d'épaulement (35).

11. Partie en forme de douille selon la revendication 1, **caractérisée en ce que** la douille d'actionnement (6) présente, à son extrémité proche du volume d'accueil (12), la bague de commande (41) qui peut se déplacer axialement par rapport à la douille d'actionnement (6).

12. Partie en forme de douille selon la revendication 1, **caractérisée en ce que** la bague de commande (41) est disposée dans une chambre annulaire.

13. Partie en forme de douille selon la revendication 12, **caractérisée en ce que** la chambre annulaire est délimitée par la douille d'actionnement (6) et par un écrou d'accouplement (53).

14. Partie en forme de douille selon la revendication 1, **caractérisée en ce qu'**à la bague de commande (41) est associé un ressort de précontrainte (47).

15. Partie en forme de douille selon la revendication 1, **caractérisée en ce que** la portée de commande (49) est une surface annulaire dont la génératrice est parallèle à l'axe longitudinal du corps de base de douille (4).

16. Partie en forme de douille selon la revendication 1, **caractérisée en ce que** la portée de commande est une surface annulaire dont la génératrice fait un angle aigu avec l'axe longitudinal du corps de base de douille (4) de manière que par une force agissant radialement vers l'extérieur sur le corps de verrouillage (18), la bague de commande (41) est précontrainte dans la direction qui l'éloigne de l'embouchure du volume d'accueil (12).

17. Partie en forme de douille selon la revendication 1, **caractérisée en ce que** le corps de verrouillage (18) est constitué par une bille.

18. Partie en forme de douille selon la revendication 1, **caractérisée en ce que** le passage transversal (17) présente un diamètre réduit à son extrémité débouchant dans le volume d'accueil (12).

19. Partie en forme de douille selon la revendication 1, **caractérisée en ce que** l'organe de fermeture de soupape (55) est précontraint en position de fermeture par un ressort (65).

20. Partie en forme de douille selon la revendication 1, **caractérisée en ce qu'**à la soupape (7) appartient un poussoir (56) logé dans le corps de base de douille et qui coopère avec l'organe de fermeture de soupape (55) de manière que la soupape est dans une position fermée en ce qui concerne l'écoulement tandis que dans une autre position dans laquelle l'organe de fermeture de soupape (55) est déplacé de la position de repos à une position en recul, un passage d'écoulement à travers la soupape (7) est libéré.

21. Partie en forme de douille selon la revendication 20, **caractérisée en ce que** dans la position fermée de la soupape (7) une portée (61) du poussoir (52) regardant vers le volume d'accueil (12) est à fleur avec une portée frontale (66) de l'organe de fermeture de soupape (55) regardant vers le volume d'accueil (12).

22. Coupleur hydraulique comprenant une partie en forme de douille selon une des revendications 1 à 21 ainsi qu'une fiche, **caractérisé en ce que** la fiche (3) présente un ajutage (73) en forme de tube, qui présente une rainure périphérique (74) ainsi qu'un épaulement de commande (75).

23. Coupleur hydraulique comprenant une partie en forme de douille selon la revendication 22, **caractérisé en ce que** la partie en forme de fiche (3) contient une soupape (84).

24. Coupleur hydraulique comprenant une partie en forme de douille selon la revendication 23, **caractérisé en ce que** la soupape (84) contient un organe de fermeture de soupape qui peut se déplacer en va et vient entre deux positions et, dans la première position, la fiche (3) est fermée par l'organe de fermeture de soupape et une face frontale de cet organe de fermeture de soupape (84) est à fleur avec une face frontale (92) de l'ajutage (73).

25. Coupleur hydraulique comprenant une partie en forme de douille selon la revendication 22, **caractérisé en ce que** l'ajutage (73) présente un alésage (79) dont le diamètre interne est supérieur au diamètre externe du poussoir (59) dans la partie en forme de douille (4).

26. Coupleur hydraulique comprenant une partie en forme de douille selon la revendication 24, **caractérisé en ce que** l'organe de fermeture de soupape (84) est précontraint en position de fermeture par un ressort (93).

27. Coupleur hydraulique comprenant une partie en forme de douille selon la revendication 24, **caractérisé en ce que** l'organe de fermeture de soupape (84) coopère avec une portée de siège de soupape (81) s'étendant axialement sur l'ajutage (73).

28. Coupleur hydraulique comprenant une partie en forme de douille selon la revendication 24, **caractérisé en ce que** l'organe de fermeture de soupape (84) présente une rainure annulaire (87) dans laquelle est logé un joint d'étanchéité O.Ring (86).

29. Coupleur hydraulique comprenant une partie en forme de douille selon la revendication 24, **caractérisé en ce que** l'organe de fermeture de soupape (84) est équipé d'un collet de guidage (89) percé d'ouvertures de passage (91).

30. Coupleur hydraulique comprenant une partie en forme de douille selon la revendication 24, **caractérisé en ce que** la partie en forme de fiche (3) présente un alésage (79) traversant étagé, l'épaulement (84) situé dans la zone de transition entre les parties d'alésage (81, 82) qui présentent des diamètres différents, regardant à l'opposé de la zone d'embouchure de l'ajustage.
